(19) Europäisches Patentamt
European Patent Office
Office européen des brevets

(11) **EP 3 276 033 B1**

(12) **EUROPEAN PATENT SPECIFICATION**

(45) Date of publication and mention of the grant of the patent:
**06.05.2020 Bulletin 2020/19**

(21) Application number: **16771745.3**

(22) Date of filing: **25.03.2016**

(51) Int Cl.:
$C22C\ 38/00^{(2006.01)}$    $C21D\ 8/02^{(2006.01)}$
$C22C\ 38/14^{(2006.01)}$    $C22C\ 38/58^{(2006.01)}$
$C21D\ 9/46^{(2006.01)}$    $C22C\ 38/02^{(2006.01)}$
$C22C\ 38/04^{(2006.01)}$    $C22C\ 38/06^{(2006.01)}$
$C22C\ 38/08^{(2006.01)}$    $C22C\ 38/12^{(2006.01)}$
$C22C\ 38/16^{(2006.01)}$    $C22C\ 38/22^{(2006.01)}$
$C22C\ 38/28^{(2006.01)}$    $C22C\ 38/44^{(2006.01)}$
$C21D\ 8/10^{(2006.01)}$    $C22C\ 38/24^{(2006.01)}$
$C22C\ 38/26^{(2006.01)}$    $C22C\ 38/46^{(2006.01)}$
$C22C\ 38/48^{(2006.01)}$    $C22C\ 38/50^{(2006.01)}$
$C21D\ 9/08^{(2006.01)}$

(86) International application number:
**PCT/JP2016/001727**

(87) International publication number:
**WO 2016/157857 (06.10.2016 Gazette 2016/40)**

(54) **HIGH-STRENGTH STEEL, PRODUCTION METHOD THEREFOR, STEEL PIPE, AND PRODUCTION METHOD FOR STEEL PIPE**

HOCHFESTER STAHL, HERSTELLUNGSVERFAHREN DAFÜR, STAHLROHR UND HERSTELLUNGSVERFAHREN FÜR DAS STAHLROHR

ACIER HAUTE RÉSISTANCE, SON PROCÉDÉ DE FABRICATION, TUYAU EN ACIER ET PROCÉDÉ DE PRODUCTION DE TUYAU EN ACIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2015 JP 2015065776**

(43) Date of publication of application:
**31.01.2018 Bulletin 2018/05**

(73) Proprietor: **JFE Steel Corporation**
**Tokyo 100-0011 (JP)**

(72) Inventors:
• **OTA, Shusaku**
 **Tokyo 100-0011 (JP)**
• **SHIMAMURA, Junji**
 **Tokyo 100-0011 (JP)**
• **ISHIKAWA, Nobuyuki**
 **Tokyo 100-0011 (JP)**
• **ENDO, Shigeru**
 **Tokyo 100-0011 (JP)**

(74) Representative: **Haseltine Lake Kempner LLP**
**Bürkleinstrasse 10**
**80538 München (DE)**

(56) References cited:
**WO-A1-2012/108027**    **WO-A1-2014/156175**
**JP-A- 2006 183 133**    **JP-A- 2006 183 133**
**JP-A- 2007 119 884**    **JP-A- 2007 119 884**
**JP-A- 2007 169 747**    **JP-A- 2007 169 747**
**JP-B2- 4 741 528**

**Description**

Technical Field

The present invention relates to high-strength steel having a tensile strength of 760 MPa or more in a mid-temperature range and a method for manufacturing the steel, and a steel pipe composed of the high-strength steel and a method for manufacturing the steel pipe. The present invention relates to a technique which can preferably be used for, in particular, a high-strength steel pipe for steam transportation.

Background Art

Examples of a method for recovering oil sand from an underground oil layer in, for example, Canada include an open-pit mining method and a steam injection method, in which high-temperature high-pressure steam is charged into an oil layer through steel pipes. Since there are only a small number of regions in which open-pit mining can be used, the steam injection method is used in many areas.
The temperature of steam which is charged into an oil layer in the steam injection method is in a temperature range of 300°C to 400°C (hereinafter, referred to as "mid-temperature range"). In the steam injection method, steam having a temperature in the mid-temperature range is charged into an oil layer under high pressure. In order to charge steam, steel pipes are used as described above. Nowadays, in order to increase the recovery rate of heavy oil and in order to decrease laying costs in response to an increase in demand for energy, there is a demand for an increase in the diameter and strength of the steel pipes.
Moreover, in the case where the steel pipes are used in cold areas such as Canada, since the aboveground parts of the steel pipes, which are exposed to outside air having a temperature of -20°C or lower, are heated to a temperature of 300°C or higher in service and cooled to a temperature of -20°C or lower out of service, the steel pipes are required to have excellent toughness in a low-temperature range and a mid-temperature range among their properties.
Examples of a conventional technique regarding a steel pipe for steam transportation which can be used for a steam injection method are described in Patent Literature 1 and Patent Literature 2. In Patent Literature 1 and Patent Literature 2, seamless steel pipes having a strength equivalent to API grade X80 are described, and the maximum outer diameter of such seamless steel pipes is 16 inches.
It is difficult to further increase the diameter of a seamless steel pipe. In addition, in the case of a seamless steel pipe, it is necessary that large amounts of alloy chemical elements be added in order to achieve a strength of API grade X80 or higher.
Here, Patent Literature 3 and Patent Literature 4 disclose techniques for manufacturing a high-strength steel pipe in which a pipe is manufactured by performing welding and with which it is possible to increase the diameter of a steel pipe. More specifically, Patent Literature 3 and Patent Literature 4 relate to techniques for manufacturing a high-strength welded steel pipe having a strength of API grade X80 or higher which is manufactured by using a TMCP (thermo-mechanical control process).

Citation List

Patent Literature

PTL 1: Japanese Unexamined Patent Application Publication No. 2000-290728
PTL 2: Japanese Patent No. 4821939
PTL 3: Japanese Patent No. 5055736
PTL 4: Japanese Patent No. 4741528
PTL 5: Japanese Patent Application No. 2006-183133

Summary of Invention

Technical Problem

In the case of Patent Literature 3, and the corresponding application, Patent Literature 5, the requirements of high-temperature properties in the mid-temperature range for grade X80 are satisfied. However, no consideration is given to a decrease in strength when a pipe is used at a high temperature for a long time. In addition, in the case of Patent Literature 4, the requirements of high-temperature properties for grade X80 when a pipe is used in the mid-temperature range for a long term are satisfied. However, it is preferable that the steel for a high-strength steel pipe for steam transportation have higher strength.

As described above, in the case of the conventional techniques, it is not possible to obtain a high-strength welded steel pipe for a steam line which satisfies both the condition that the steel pipe has a large diameter and the condition that the steel pipe has the strength properties required for a high-strength welded steel pipe for steam transportation.

Therefore, an object of the present invention is to provide a technique for manufacturing a high-strength steel pipe for steam transportation of API grade X100 or higher.

Here, in the present description, the term "welding" regarding the toughness of a weld heat-affected zone means welding which is used for the seam welding of a steel pipe.

Solution to Problem

The present inventors diligently conducted investigations regarding properties of a high-strength welded steel pipe having a large diameter in the mid-temperature range, and, as a result, found that, by appropriately selecting a chemical composition and manufacturing conditions, it is possible to obtain high-strength steel from which it is possible to manufacture a high-strength steel pipe having the strength properties required for a high-strength steel pipe for steam transportation despite having a large diameter.

The present invention has been completed on the basis of the knowledge described above and additional investigations, that is, the present invention is as in claims 1 to 5.

Advantageous Effects of Invention

According to the present invention, it is possible to obtain a high-strength steel pipe having strength properties required for a high-strength steel pipe for steam transportation despite having a large diameter.

According to the high-strength steel of the present invention, since there is an increase in the toughness of a weld heat-affected zone also in the mid-temperature range, the high-strength steel according to the present invention can preferably be used as steel for a high-strength steel pipe for steam transportation.

In addition, according to the present invention, even if the contents of alloy elements are decreased, it is possible to realize the above-described effects of, for example, achieving the excellent strength properties. Therefore, according to the present invention, it is possible to decrease the manufacturing costs of a high-strength steel pipe for steam transportation while improving material properties such as strength properties.

Description of Embodiments

Hereafter, the embodiments of the present invention will be described. Here, the present invention is not limited to the embodiments below.

<High-strength steel>

The high-strength steel according to the present invention has a chemical composition containing, by mass%, C: 0.05% to 0.09%, Si: 0.05% to 0.20%, Mn: 1.6% to 2.0%, P: 0.020% or less, S: 0.002% or less, Mo: 0.20% to 0.50%, Nb: 0.02% to 0.06%, Ti: 0.005% to 0.02%, Al: 0.01% to 0.04%, N: 0.004% to 0.006%. In the description below, "%" used when describing the content of the constituent chemical elements means "mass%".

C: 0.05% to 0.09%

C is a chemical element which is necessary for achieving satisfactory strength of steel through solid solution strengthening and precipitation strengthening. In particular, an increase in the amount of solute C and the formation of precipitates are important for achieving satisfactory strength in the mid-temperature range. In order to achieve the predetermined strength at room temperature and in the mid-temperature range, the C content is set to be 0.05% or more. In the case where the C content is more than 0.09%, there is a decrease in the toughness of a weld heat-affected zone. Therefore, the C content is set to be 0.05% to 0.09%.

Si: 0.05% to 0.20%

Si is added for the purpose of deoxidizing. In the case where the Si content is less than 0.05%, it is not possible to realize a sufficient deoxidizing effect. In the case where the Si content is more than 0.20%, there is a decrease in the toughness of a weld heat-affected zone. Therefore, the Si content is set to be 0.05% to 0.20%.

Mn: 1.6% to 2.0%

Mn is a chemical element which is effective for increasing the strength and toughness of steel. Such effects are not satisfactorily realized in the case where the Mn content is less than 1.6%. In addition, in the case where the Mn content is more than 2.0%, there is a significant decrease in the toughness of a weld heat-affected zone. Therefore, the Mn content is set to be 1.6% to 2.0%.

P: 0.020% or less

P is an impurity chemical element and decreases toughness. Therefore, it is preferable that the P content be as small as possible. However, there is an increase in manufacturing costs in the case where the P content is excessively decreased. Therefore, the P content is set to be 0.020% or less so that a decrease in toughness is within an acceptable range.

S: 0.002% or less

S is an impurity chemical element and decreases toughness. Therefore, it is preferable that the S content be as small as possible. The S content is set to be 0.002% or less.

Mo: 0.20% to 0.50%

Mo is one of the chemical elements which are effective for increasing strength, in particular, strength in the mid-temperature range through solid solution strengthening and through precipitation strengthening due to carbides. In the case where the Mo content is less than 0.20%, it is not possible to achieve sufficient strength. On the other hand, in the case where the Mo content is more than 0.50%, such an effect becomes saturated, and there is a decrease in the toughness of a weld heat-affected zone. Therefore, the Mo content is set to be 0.20% to 0.50%.

Nb: 0.02% to 0.06%

Nb is a chemical element which is necessary for achieving sufficient strength and toughness by forming a fine microstructure as a result of inhibiting the growth of crystal grains when slab heating is performed and when rolling is performed. In addition, Nb is also a chemical element which is necessary for achieving satisfactory strength in the mid-temperature range by forming carbides. In order to achieve the strength which is required for steel of grade X100 by realizing such effects, it is necessary that the Nb content be 0.02% or more. In the case where the Nb content is more than 0.06%, such effects become almost saturated, and there is a decrease in the toughness of a weld heat-affected zone. Therefore, the Nb content is set to be 0.02% to 0.06%.

Ti: 0.005% to 0.02%

Ti inhibits the growth of austenite grains in a high-temperature range of 1350°C or higher in a weld heat-affected zone by combining with N to form TiN. As a result, adding Ti is effective for increasing the toughness of a weld heat-affected zone in a low-temperature range of -20°C or lower and in a mid-temperature range of 300°C or higher. In order to realize such an effect, it is necessary that the Ti content be 0.005% or more. In the case where the Ti content is more than 0.02%, there is a decrease in toughness due to an increase in the grain size of precipitates. Therefore, the Ti content is set to be 0.005% to 0.02%.

Al: 0.01% to 0.04%

Al is added as a deoxidizing agent. It is possible to realize its effect as a deoxidizing agent in the case where the Al content is 0.01% or more. In the case where the Al content is more than 0.04%, there is a decrease in toughness. Therefore, the Al content is set to be 0.01% to 0.04%.

N: 0.004% to 0.006%

N combines with Ti to form TiN. TiN is finely dispersed in a high-temperature range of 1350°C or higher in a weld heat-affected zone. As a result of such fine dispersion, there is a decrease in the grain size of prior austenite in a weld heat-affected zone. Such a decrease in grain size significantly contributes to an increase in the toughness of a weld heat-affected zone in a low-temperature range of - 20°C or lower and in a mid-temperature range of 300°C or higher. In the case where the N content is less than 0.004%, it is not possible to sufficiently realize such an effect described above. In the case where the N content is more than 0.006%, since there is an increase in the grain size of prior austenite due to an increase in the grain size of precipitates, and since there is an increase in the amount of solute N, there is a decrease in the toughness of a weld heat-affected zone. Therefore, the N content is set to be 0.004% to 0.006%.

Ti/N: 2.0 to 4.0

By specifying Ti/N within an appropriate range, since TiN is finely dispersed, it is possible to realize the refinement of prior austenite grains in a weld heat-affected zone. As a result of such refinement, there is an increase in the toughness of a weld heat-affected zone in a low temperature range of -20°C or lower and in a mid-temperature range of 300°C or higher. In the case where Ti/N is less than 2.0, such an effect is not sufficiently realized. In the case where Ti/N is more than 4.0, there is an increase in the grain size of prior austenite due to an increase in the grain size of precipitates. As a result of such coarsening, there is a decrease in the toughness of a weld heat-affected zone. Therefore, the value of Ti/N is set to be 2.0 to 4.0.

X(%): 0.90% or more

In order to control X, which is expressed by the formula $0.35Cr + 0.9Mo + 12.5Nb + 8V$ (the symbols of elements in the formula respectively denote the contents (mass%) of the corresponding chemical elements), to be 0.90% or more, the contents of these chemical elements are controlled. The formula described above, which expresses X, is an important factor for obtaining steel having an excellent strength of grade X100 or higher in the mid-temperature range and good low-temperature toughness at - 20°C by improving intra-grain precipitation strengthening during rolling as a result of increasing the temper softening resistance of steel having a chemical composition within the range described above. Such an effect is realized to the maximum extent in combination with the manufacturing conditions described below. It is necessary that X be 0.90% or more in order to achieve a strength of grade X100 at a temperature of 350°C. In addition, in the case where X is 2.0% or more, there may be a decrease in the low-temperature toughness of a welded zone. Therefore, it is preferable that X be less than 2.0%, more preferably less than 1.8%, or even more preferably less than 1.6%.
In order to further improve the properties of the high-strength steel according to the present invention, the high-strength steel may contain one, two, or more of Cu, Ni, Cr, V, and Ca.

Cu: 0.50% or less

Cu is one of the chemical elements which are effective for increasing toughness and strength. In order to realize such effects, it is preferable that the Cu content be 0.05% or more. In the case where the Cu content is more than 0.50%, there is a decrease in weldability. Therefore, in the case where Cu is added, the Cu content is set to be 0.50% or less.

Ni: 0.50% or less

Ni is one of the chemical elements which are effective for increasing toughness and strength. In order to realize such effects, it is preferable that the Ni content be 0.05% or more. In the case where the Ni content is more than 0.50%, such effects become saturated, and there is an increase in manufacturing costs. Therefore, in the case where Ni is included, the Ni content is set to be 0.50% or less.

Cr: 0.50% or less

Cr is one of the chemical elements which are effective for increasing strength. In order to realize such an effect, it is preferable that the Cr content be 0.05% or more. In the case where the Cr content is more than 0.50%, there is a negative effect on weldability. Therefore, in the case where Cr is included, the Cr content is set to be 0.50% or less.

V: 0.08% or less

V contributes to an increase in strength by forming compound precipitates in combination with Ti. In order to realize such an effect, it is preferable that the V content be 0.01% or more. In the case where the V content is more than 0.08%, there is a decrease in the toughness of a weld heat-affected zone. Therefore, in the case where V is included, the V content is set to be 0.08% or less.

Ca: 0.0005% to 0.0040%

Ca increases toughness by controlling the shape of sulfide-based inclusions. Such an effect is realized in the case where the Ca content is 0.0005% or more. In the case where the Ca content is more than 0.0040%, such an effect becomes saturated, and there is conversely a decrease in toughness due to a decrease in cleanliness. Therefore, in the case where Ca is included, the Ca content is set to be 0.0005% to 0.0040%. Here, since there is no decrease in the effects of the present invention even in the case where the Ca content is less than the above-mentioned lower limit, Ca is contained as an inevitable impurity in the case where the Ca content is less than the lower limit.

It is preferable that the contents of these chemical elements be controlled so that Cu + Ni + Cr + Mo (the symbols of elements respectively denote the contents (mass%) of the corresponding chemical elements) be 1.50% or less. The group of the chemical elements mentioned above contributes to an increase in strength, and there is an increase in the effects described above in the case where the contents of these chemical elements are increased. In particular, Ni is effective for increasing toughness. In addition, in order to decrease manufacturing costs, it is preferable that the upper limit of the total content of the group of the chemical elements mentioned above be 1.50% or less, or more preferably 1.20% or less. As described above, in the present invention, by utilizing the specified chemical composition and microstructure, it is possible to achieve the desired strength and toughness even in the case where the contents of alloy chemical elements are decreased. Here, in order to increase strength, it is preferable that the above-mentioned total content be 0.30% or more.

The remainder which is different from the constituent chemical elements described above is Fe and inevitable impurities. Examples of the inevitable impurities include B: 0.0002% or less.

Hereafter, the microstructure of the high-strength steel according to the present invention will be described. In the microstructure of the high-strength steel according to the present invention, the bainite phase fraction is 70% or more in terms of area ratio. It is necessary that the bainite phase fraction be 70% or more in order to achieve a strength of API grade X100 or higher. Here, among phases other than bainite, for example, ferrite, pearlite, martensite, a martensite-austenite constituent (MA), and retained austenite may be included in an amount of 30% or less in terms of total area ratio.

In addition, the high-strength steel according to the present invention has a tensile strength of 760 MPa or more at a temperature of 350°C. By utilizing the above-described chemical composition and microstructure, the high-strength steel has excellent tensile strength even in the mid-temperature range.

<Steel pipe>

The steel pipe according to the present invention is composed of the high-strength steel according to the present invention described above. Since the steel pipe according to the present invention is composed of the high-strength steel according to the present invention, the steel pipe has strength properties which are required for a high-strength steel pipe for steam transportation despite having a large diameter.

The term "a large diameter" means a case where a steel pipe has an inner diameter (diameter) of 500 mm or more. In particular, according to the present invention, it is possible to sufficiently increase the above-mentioned inner diameter to 850 mm while maintaining the strength properties which are required for a high-strength steel pipe for steam transportation.

In addition, although there is no particular limitation on the thickness of a steel pipe, the thickness is 12 mm to 30 mm in the case of a steel pipe for steam transportation.

As in the case of the high-strength steel described above, the term "strength properties which are required for a high-strength welded steel pipe for steam transportation" means a case where a steel pipe has a tensile strength of 760 MPa or more at a temperature of 350°C.

<Method for manufacturing high-strength steel>

Hereafter, the method for manufacturing the high-strength steel according to the present invention will be described. The manufacturing method according to the present invention includes a heating process, a hot rolling process, and an accelerated cooling process. Each process will be described hereafter. Here, in the description below, the term "temperature" means an average temperature in the thickness direction, unless otherwise noted. It is possible to derive the average temperature in the thickness direction through the use of, for example, simulation calculation from, for example, the thickness, the surface temperature, and the cooling conditions. For example, by calculating temperature distribution in the thickness direction through the use of a finite difference method, the average temperature in the thickness direction is derived.

Heating process

In the present invention, the heating process is a process in which steel raw material is heated to a temperature of 1050°C to 1200°C. Here, examples of the steel raw material include a slab, which is obtained by casting molten steel. Since the chemical composition of the steel raw material becomes the chemical composition of high-strength steel, the chemical composition of the high-strength steel may be controlled when the chemical composition of the molten steel is controlled. Here, there is no particular limitation on the steel-making method used for manufacturing the steel raw material. It is preferable that the steel slab be manufactured by using a steel making process which utilizes a converter and a casting process which utilizes a continuous casting method from the viewpoint of economic efficiency.

In order to achieve sufficient strength at room temperature and in the mid-temperature range by sufficiently progressing the formation of austenite and the solid solution of carbides when the hot rolling process described below is performed, it is necessary that the heating temperature of the steel be 1050°C or higher. On the other hand, in the case where the heating temperature is higher than 1200°C, since austenite grains significantly grow, there is a decrease in the toughness of a base metal. Therefore, the heating temperature is set to be 1050°C to 1200°C.

Hot rolling process

In the present invention, the hot rolling process is a process in which the steel raw material, which has been heated in the heating process, is subjected to hot rolling under the conditions of an accumulated rolling reduction ratio of 50% or more in a temperature range of 900°C or lower and a rolling finish temperature of 850°C or lower.

The upper limit of an austenite non-recrystallization temperature range is increased to a temperature of about 900°C by adding Nb. By performing rolling in a temperature range of 900°C or lower, austenite grains are elongated so as to have a small grain size in the thickness and width directions of a steel plate, and there is an increase in the density of dislocations which are formed in the grains by performing rolling. In the case where the accumulated rolling reduction ratio in a temperature range of 900°C or lower is controlled to be 50% or more and the rolling finish temperature is controlled to be 850°C or lower, since such effects are significantly realized, there is an increase in the strength, in particular, the strength in the mid-temperature range of high-strength steel after hot rolling or below-described cooling has been performed and of a steel pipe which is composed of the high-strength steel, and there is also a significant increase in toughness.

In the case where the accumulated rolling reduction ratio is less than 50% in a temperature range of 900°C or lower or where the rolling finish temperature is higher than 850°C, since there is an insufficient decrease in the grain size of austenite, and since there is an insufficient increase in the density of dislocations formed in the grains, there is a decrease in strength and toughness in the mid-temperature range. Therefore, the accumulated rolling reduction ratio is set to be 50% or more in a temperature range of 900°C or lower, and the rolling finish temperature is set to be 850°C or lower.

Here, although there is no particular limitation on the lower limit of the rolling finish temperature described above, it is preferable that the rolling finish temperature described above be equal to or higher than the Ar3 temperature in order to achieve satisfactory homogeneity of a microstructure by starting cooling from the state in which the whole steel is composed of austenite.

Accelerated cooling process

In the present invention, the accelerated cooling process is a process in which the hot-rolled steel plate obtained in the hot rolling process is subjected to accelerated cooling under the conditions of a cooling rate (which means an average cooling rate calculated by dividing the difference between the cooling start temperature and the cooling stop temperature by the time required from when cooling is started until cooling is stopped) of 5°C/s or more and a cooling stop temperature of 300°C to 450°C.

There is a tendency for the strength of high-strength steel to increase with an increase in cooling rate in accelerated cooling. In the case where the cooling rate when accelerated cooling is performed is less than 5°C/s, since the transformation of steel starts at a high temperature, ferrite and pearlite are formed in addition to bainite, and dislocation recovery progresses during cooling. Therefore, in the case where the cooling rate is less than 5°C/s, it is not possible to achieve sufficient strength at room temperature or in the mid-temperature range. Therefore, the cooling rate when accelerated cooling is performed is set to be 5°C/s or more. Here, although there is no particular limitation on the upper limit of the cooling rate, it is preferable that the cooling rate be 50°C/s or less in order to prevent an excessive increase in martensite phase fraction.

There is a tendency for the strength of a steel plate to increase with a decrease in cooling stop temperature in accelerated cooling. In the case where the cooling stop temperature in accelerated cooling is higher than 450°C, since there is a decrease in the amount of solute carbon due to the growth of carbides being promoted, it is not possible to achieve sufficient strength, in particular, sufficient strength in the mid-temperature range of high-strength steel after cooling has been performed and of a steel pipe which is composed of the high-strength steel. In addition, in the case where the cooling stop temperature in accelerated cooling is higher than 450°C, since a martensite-austenite constituent having a large grain size is formed, there is a significant decrease in toughness. On the other hand, in the case where the cooling stop temperature is lower than 300°C, there is a decrease in toughness due to the formation of martensite, and there is a significant decrease in strength in the mid-temperature range due to the decomposition of precipitated low-temperature-transformation products in the mid-temperature range. Therefore, the cooling stop temperature in accelerated cooling is set to be 300°C to 450°C. Here, it is preferable that the cooling stop temperature be 400°C or lower, or more preferably lower than 400°C.

<Method for manufacturing steel pipe>

The method for manufacturing the steel pipe according to the present invention includes a cold forming process and a welding process.

Cold forming process

The cold forming process is a process in which a steel plate which is composed of the high-strength steel according to the present invention is subjected to cold forming into a pipe shape.

In the case where a steel pipe for steam transportation is manufactured, it is preferable that the thickness of the above-described steel plate be 12 mm to 30 mm.

There is no particular limitation on the cold forming method used for forming a steel plate into a pipe shape. Examples of a method for forming a steel pipe include a UOE forming method, a press bend forming method, and a roll forming method.

Welding process

The welding process is a process in which butt portions of the steel plate, which has been formed into a pipe shape in the cold forming process, are welded. Although there is no particular limitation on the method used for welding, welding connection may be performed by using, for example, a submerged arc welding method. Here, it is preferable that expansion be performed on the steel pipe after welding has been performed in order to increase the roundness of the cross-section of the steel pipe. A heat treatment after a steel pipe has been manufactured may be performed in accordance with desired properties, and there is no particular limitation.

EXAMPLES

After having performed cold forming on steel plates which had been manufactured under the conditions given in Table 2 from steels A through N having the chemical compositions given in Table 1, welded steel pipes having a pipe wall thicknesses of 15 mm to 20 mm were manufactured by performing seam welding. Here, in Table 2, the term "Rolling Reduction Ratio" means accumulated rolling reduction ratio in a temperature range of 900°C or lower, the abbreviated term "FT" means rolling finish temperature, the abbreviated term "CR" means cooling rate, and the abbreviated term "CS" means cooling stop temperature.

By taking a sample for steel microstructure observation from the central portion in the width direction of the steel plate which had been manufactured as described above, and by performing mirror polishing on a cross-section in the thickness direction parallel to the rolling longitudinal direction followed by performing nital etching on the cross-section, a microstructure was exposed. Subsequently, after having obtained steel microstructure photographs in five fields of view selected at random through the use of an optical microscope at a magnification of 400 times, bainite phase fraction was determined in the photographs through the use of an image interpretation device.

Regarding the properties of the steel plate, after having taken a tensile test piece in a direction at a right angle to the rolling direction of the steel plate, tensile strength (units: MPa) at room temperature and at a temperature of 350°C was determined. A rectangular test piece specified by the API was used in the tensile test at room temperature, and a round-bar-form test piece having a diameter of 6 mm was used in the tensile test at a temperature of 350°C. A case where the tensile strength (units: MPa) at room temperature and a temperature of 350°C was 760 MPa or more was judged as good.

The toughness of a weld heat-affected zone of the steel pipe was evaluated by determining Charpy absorbed energy (J) through the use of a Charpy impact test. The test piece for a Charpy impact test was a full-size test piece having a 2-mm-V notch, and three test pieces were taken from the central portion in the pipe wall thickness direction so that the notch was formed at a position of a weld heat-affected zone and so that the longitudinal direction of the test piece was the circumferential direction. A Charpy impact test was performed at a temperature of -20°C. Evaluation was performed on the basis of the average value for the three test pieces, and a case where the average value was 50 J or more was judged as good.

The strength (units: MPa) of the steel pipe at room temperature and at a temperature of 350°C was determined. A rectangular test piece specified by the API was used in the tensile test at room temperature, and a round-bar-form test piece having a diameter of 6 mm was used in the tensile test at a temperature of 350°C. A case where, at room temperature and a temperature of 350°C, the yield strength was 690 MPa or more and the tensile strength was 760 MPa or more was judged as good.

Here, in the case of some of the comparative examples, since the steel plates having unsatisfactory properties were not formed into a pipe shape, steel pipe properties thereof were not evaluated.

The steel-plate-manufacturing conditions and the derived properties are given in Table 2. In the case of the example steels of the present invention, whose chemical compositions and steel-plate-manufacturing conditions were within the range according to the present invention, the steel plates and the steel pipes had a tensile strength of 760 MPa or more at room temperature and at a temperature of 350°C and good toughness of a weld heat-affected zone.

On the other hand, the comparative steels, whose chemical compositions, X values, or steel-plate-manufacturing conditions were out of the range according to the present invention, were inferior to the example steels of the present invention in terms of strength at room temperature or at a temperature of 350°C and/or the toughness of a weld heat-affected zone.

[Table 1]

(mass%)

| Steel Code | C | Si | Mn | P | S | Mo | Nb | Ti | Al | N | Cu | Ni | Cr | V | Ca | X | Ti/N | Note |
|---|---|---|---|---|---|---|---|---|---|---|---|---|---|---|---|---|---|---|
| A | 0.085 | 0.06 | 1.73 | 0.011 | 0.002 | 0.35 | 0.048 | 0.010 | 0.023 | 0.0045 | | | | | 0.0021 | 0.92 | 2.2 | Example Steel |
| B | 0.050 | 0.15 | 1.98 | 0.009 | 0.001 | 0.31 | 0.045 | 0.013 | 0.022 | 0.0048 | | | | 0.030 | 0.0020 | 1.08 | 2.7 | Example Steel |
| C | 0.070 | 0.15 | 1.90 | 0.010 | 0.001 | 0.45 | 0.049 | 0.011 | 0.043 | 0.0046 | | | | 0.062 | 0.0017 | 1.51 | 2.4 | Example Steel |
| D | 0.070 | 0.15 | 1.92 | 0.010 | 0.001 | 0.35 | 0.060 | 0.011 | 0.043 | 0.0041 | 0.25 | 0.15 | | | 0.0018 | 1.07 | 2.7 | Example Steel |
| E | 0.070 | 0.12 | 1.85 | 0.009 | 0.001 | 0.30 | 0.055 | 0.008 | 0.021 | 0.0041 | | 0.20 | 0.30 | 0.040 | 0.0021 | 1.38 | 2.0 | Example Steel |
| F | 0.060 | 0.18 | 1.90 | 0.008 | 0.001 | 0.24 | 0.048 | 0.016 | 0.025 | 0.0057 | 0.25 | 0.22 | | 0.050 | 0.0026 | 1.22 | 2.8 | Example Steel |
| G | 0.060 | 0.18 | 1.85 | 0.010 | 0.002 | 0.48 | 0.030 | 0.016 | 0.025 | 0.0057 | 0.15 | 0.30 | | 0.020 | 0.0024 | 0.97 | 2.8 | Example Steel |
| H | 0.075 | 0.10 | 1.62 | 0.009 | 0.001 | 0.41 | 0.024 | 0.010 | 0.014 | 0.0044 | | | 0.20 | 0.075 | 0.0020 | 1.34 | 2.3 | Example Steel |
| I | 0.060 | 0.28 | 1.82 | 0.009 | 0.002 | 0.28 | 0.030 | 0.012 | 0.025 | 0.0042 | 0.15 | 0.15 | 0.20 | | 0.0024 | **0.70** | 2.9 | Comparative Steel |
| J | **0.030** | 0.12 | 1.85 | 0.011 | 0.002 | 0.35 | 0.041 | 0.008 | 0.019 | 0.0041 | | | | | 0.0022 | **0.83** | 2.0 | Comparative Steel |
| K | **0.110** | **0.26** | 1.60 | 0.008 | 0.001 | 0.17 | 0.036 | 0.015 | 0.023 | 0.0047 | | | | | 0.0025 | **0.60** | 3.2 | Comparative Steel |
| L | 0.070 | 0.11 | **1.45** | 0.012 | 0.001 | 0.42 | 0.045 | 0.015 | 0.035 | 0.0034 | 0.22 | 0.10 | 0.35 | 0.060 | 0.0016 | 1.54 | **4.4** | Comparative Steel |
| M | 0.060 | 0.15 | 1.70 | 0.010 | 0.002 | 0.15 | **0.080** | 0.013 | 0.025 | 0.0058 | | 0.28 | | | 0.0030 | 1.14 | 2.2 | Comparative Steel |
| N | 0.070 | 0.18 | 1.74 | 0.013 | 0.002 | **0.55** | 0.021 | 0.013 | 0.019 | 0.0048 | | | | 0.030 | 0.0018 | 1.00 | 2.7 | Comparative Steel |
| O | 0.060 | 0.15 | 1.81 | **0.026** | **0.004** | 0.21 | **0.001** | 0.015 | 0.028 | 0.0046 | 0.29 | 0.21 | 0.23 | | 0.0021 | **0.28** | 3.3 | Comparative Steel |

Annotation: An underlined portion written in bold indicates a value out of the range according to the present invention.
Annotation: X = 0.35Cr + 0.9Mo + 12.5Nb + 8V

The symbols of elements respectively denote the contents (mass%) of the corresponding alloy chemical elements.

[Table 2]

| No. | Steel | Thickness (mm) | Steel-Plate-Manufacturing Condition | | | | | Steel Plate Bainite Phase Fraction (%) | Steel Plate Tensile Strength (MPa) | | Steel Pipe Yield Strength (MPa) | | Steel Pipe Tensile Strength (MPa) | | Toughness of Weld Heat-Affected Zone of Steel Pipe (J) | Note |
|---|---|---|---|---|---|---|---|---|---|---|---|---|---|---|---|---|
| | | | Heating Temperature (°C) | Rolling Reduction Ratio (%) | FT (°C) | CR (°C/s) | CS (°C) | | Room Temperature | 350°C | Room Temperature | 350°C | Room Temperature | 350°C | -20°C | |
| 1 | A | 20 | 1150 | 75 | 850 | 25 | 350 | 93 | 792 | 781 | 696 | 709 | 801 | 768 | 98 | Example Steel |
| 2 | B | 15 | 1200 | 75 | 760 | 40 | 300 | 84 | 811 | 765 | 764 | 718 | 816 | 769 | 133 | Example Steel |
| 3 | C | 15 | 1080 | 75 | 850 | 40 | 450 | 96 | 829 | 797 | 728 | 695 | 818 | 771 | 102 | Example Steel |
| 4 | C | 15 | 1080 | 80 | 770 | 40 | 300 | 87 | 864 | 843 | 745 | 752 | 865 | 821 | 86 | Example Steel |
| 5 | D | 15 | 1120 | 70 | 750 | 40 | 320 | 89 | 811 | 792 | 763 | 700 | 813 | 785 | 62 | Example Steel |
| 6 | E | 20 | 1150 | 75 | 800 | 25 | 340 | 92 | 832 | 818 | 791 | 732 | 844 | 823 | 78 | Example Steel |
| 7 | F | 20 | 1200 | 75 | 800 | 25 | 390 | 98 | 795 | 764 | 750 | 713 | 788 | 769 | 122 | Example Steel |
| 8 | G | 15 | 1080 | 75 | 800 | 40 | 400 | 100 | 808 | 762 | 723 | 696 | 810 | 771 | 93 | Example Steel |
| 9 | H | 20 | 1200 | 75 | 800 | 30 | 400 | 100 | 844 | 820 | 692 | 701 | 842 | 809 | 107 | Example Steel |
| 10 | D | 15 | **1000** | 75 | 800 | 40 | 320 | 85 | 762 | **735** | | | | | | Comparative Steel |
| **11** | D | 15 | 1200 | **40** | 800 | 40 | 310 | 81 | | **751** | | | | | | Comparative Steel |
| **12** | D | 15 | | 75 | **880** | 40 | 450 | 91 | | **738** | | | | | | Comparative Steel |

| No. | Steel | Thickness (mm) | Steel-Plate-Manufacturing Condition | | | | | Steel Plate | Steel Plate Tensile Strength (MPa) | | Steel Pipe Yield Strength (MPa) | | Steel Pipe Tensile Strength (MPa) | | Toughness of Weld Heat-Affected Zone of Steel Pipe (J) | Note |
|---|---|---|---|---|---|---|---|---|---|---|---|---|---|---|---|---|
| | | | Heating Temperature (°C) | Rolling Reduction Ratio (%) | FT (°C) | CR (°C/s) | CS (°C) | Bainite Phase Fraction (%) | Room Temperature | 350°C | Room Temperature | 350°C | Room Temperature | 350°C | -20°C | |
| **13** | D | 15 | 1200 | 75 | 800 | 40 | **200** | **57** | | 772 | 695 | 641 | 861 | 770 | 61 | Comparative Steel |
| **14** | **I** | 20 | 1150 | 75 | 800 | 35 | 380 | 94 | 792 | **756** | | | | | | Comparative Steel |
| **15** | **J** | 15 | 1200 | 75 | 800 | 40 | 320 | 75 | | **616** | | | | | | Comparative Steel |
| **16** | **K** | 15 | 1140 | 75 | 820 | 40 | 360 | 97 | | 801 | 786 | 704 | 834 | 813 | 32 | Comparative Steel |
| **17** | **L** | 20 | 1100 | 75 | 840 | 25 | 320 | 90 | 812 | 796 | 742 | 714 | 824 | 781 | 47 | Comparative Steel |
| **18** | **M** | 20 | 1200 | 70 | 800 | 30 | 350 | 91 | 762 | **727** | | | | | | Comparative Steel |
| **19** | **N** | 20 | 1080 | 75 | 840 | 30 | 300 | 78 | | 791 | 759 | 696 | 846 | 778 | 43 | Comparative Steel |
| **20** | **O** | 20 | 1100 | 70 | 780 | 25 | 390 | 86 | 782 | **717** | | | | | | Comparative Steel |

Annotation: An underlined portion written in bold indicates a value out of the range according to the present invention.

EP 3 276 033 B1

13

**Claims**

1.  High-strength steel having
    a chemical composition containing, by mass%, C: 0.05% to 0.09%, Si: 0.05% to 0.20%, Mn: 1.6% to 2.0%, P: 0.020% or less, S: 0.002% or less, Mo: 0.20% to 0.50%, Nb: 0.02% to 0.06%, Ti: 0.005% to 0.02%, Al: 0.01% to 0.04%, N: 0.004% to 0.006%, and optionally further containing one, two, or more of Cu: 0.50% or less, Ni: 0.50% or less, Cr: 0.50% or less, V: 0.08% or less, and Ca: 0.0005% to 0.0040%, and the balance being Fe and inevitable impurities, in which Ti/N is 2.0 to 4.0, and X(%) calculated by using equation (1) is 0.90% or more,
    a microstructure having a bainite phase fraction of 70% or more, and
    a tensile strength of 760 MPa or more at a temperature of 350°C:

    $$X = 0.35Cr + 0.9Mo + 12.5Nb + 8V \qquad (1),$$

    where the symbols of elements in equation (1) respectively denote the contents (mass%) of the corresponding chemical elements, and where the symbol of a chemical element which is not included is assigned a value of 0.

2.  A steel pipe composed of the high-strength steel according to Claim 1.

3.  A method for manufacturing the high-strength steel according to Claim 1, the method comprising
    a heating process in which steel raw material is heated to a temperature of 1050°C to 1200°C,
    a hot rolling process in which the steel raw material, which has been heated in the heating process, is hot-rolled under the conditions of an accumulated rolling reduction ratio of 50% or more in a temperature range of 900°C or lower and a rolling finish temperature of 850°C or lower, and
    an accelerated cooling process in which the hot-rolled steel plate, which has been obtained in the hot rolling process, is subjected to accelerated cooling under the conditions of a cooling rate of 5°C/s or more and a cooling stop temperature of 300°C to 450°C.

4.  A method for manufacturing a steel pipe, the method comprising
    a cold forming process in which a steel plate composed of the high-strength steel manufactured according to Claim 3 is subjected to cold forming so as to be formed into a pipe shape and
    a welding process in which butt portions of the steel plate, which has been formed into a pipe shape in the cold forming process, are welded.

5.  A method for manufacturing a steel pipe according to claim 4, wherein the steel pipe has an API grade X100 or higher.


**Patentansprüche**

1.  Hochfester Stahl, der Folgendes aufweist
    eine chemische Zusammensetzung enthaltend, in Masse-%, C: 0,05 % bis 0,09 %, Si: 0,05 % bis 0,20 %, Mn: 1,6 % bis 2,0 %, P: 0,020 % oder weniger, S: 0,002 % oder weniger, Mo: 0,20 % bis 0,50 %, Nb: 0,02 % bis 0,06 %, Ti: 0,005 % bis 0,02 %, Al: 0,01 % bis 0,04 %, N: 0,004 % bis 0,006 % und wahlweise ferner enthaltend eines, zwei oder mehr von Cu: 0,50 % oder weniger, Ni: 0,50 % oder weniger, Cr: 0,50 % oder weniger, V: 0,08 % oder weniger, und Ca: 0,0005 % bis 0,0040 % und wobei der Rest Fe und unvermeidliche Verunreinigungen ist, wobei Ti/N 2,0 bis 4,0 beträgt und X (%), durch Benutzen der Gleichung (1) berechnet, 0,90 % oder mehr beträgt, eine Mikrostruktur, die eine Bainitphasefraktion von 70 % oder mehr aufweist, und
    eine Zugfestigkeit von 760 MPa oder mehr bei einer Temperatur von 350 °C:

    $$X = 0,35\,Cr + 0,9\,Mo + 12,5\,Nb + 8V \qquad (1),$$

    wobei die Symbole von Elementen in der Gleichung (1) jeweils die Gehalte (Masse-%) der entsprechenden chemischen Elemente angeben und wobei dem Symbol eines chemischen Elements, das nicht eingeschlossen ist, ein Wert von 0 zugeordnet ist.

2.  Stahlrohr, das aus dem hochfesten Stahl nach Anspruch 1 besteht.

**3.** Verfahren für die Herstellung des hochfesten Stahls nach Anspruch 1, wobei das Verfahren Folgendes umfasst einen Erhitzungsvorgang, wobei das Stahlrohmaterial auf eine Temperatur von 1050 °C bis 1200 °C erhitzt wird, einen Heißwalzvorgang, wobei das Stahlrohmaterial, das bei dem Erhitzungsvorgang erhitzt worden ist, unter den Bedingungen eines kumulierten Walzreduktionsverhältnisses von 50 % oder mehr in einem Temperaturbereich von 900 °C oder darunter und einer Fertigwalztemperatur von 850 °C oder darunter heißgewalzt wird und einen beschleunigten Kühlvorgang, wobei die heißgewalzte Stahlplatte, die beim Heißwalzvorgang erhalten worden ist, beschleunigtem Kühlen unter den Bedingungen einer Kühlrate von 5 °C/s oder mehr und einer Kühlstopptemperatur von 300 °C bis 450 °C unterworfen wird.

**4.** Verfahren für die Herstellung eines Stahlrohrs, wobei das Verfahren Folgendes umfasst einen Kaltformvorgang, wobei eine Stahlplatte, die aus dem hochfesten Stahl besteht, der Anspruch 3 entsprechend hergestellt worden ist, Kaltformen unterworfen wird, um zu einer Rohrgestalt geformt zu werden, und einen Schweißvorgang, wobei Endabschnitte der Stahlplatte, die beim Kaltformvorgang zu einer Rohrgestalt geformt worden ist, geschweißt werden.

**5.** Verfahren für die Herstellung eines Stahlrohrs nach Anspruch 4, wobei das Stahlrohr eine API-Güte X100 oder höher aufweist.

## Revendications

**1.** Acier haute résistance présente
une composition chimique contenant, en % en masse, C : 0,05 % à 0,09 %, Si : 0,05 % à 0,20 %, Mn : 1,6 % à 2,0 %, P : 0,020 % ou moins, S : 0,002 % ou moins, Mo : 0,20 % à 0,50 %, Nb : 0,02 % à 0,06 %, Ti : 0, 005 % à 0,02 %, Al : 0,01 % à 0,04 %, N : 0,004 % à 0,006 %, et facultativement contenant en outre un, deux ou plus parmi Cu : 0,50 % ou moins, Ni : 0,50 % ou moins, Cr : 0,50 % ou moins, V : 0,08 % ou moins, et Ca : 0,0005 % à 0,0040 %, et le reste étant Fe et des impuretés inévitables, dans lequel Ti/N est 2,0 à 4,0 et X (%) calculé en utilisant la formule (1) est égal ou supérieur à 0,90 %,
une microstructure ayant une fraction de phase bainitique de 70 % ou plus, et
une résistance à la traction de 760 MPa ou plus à une température de 350°C :

$$X = 0,35\ Cr + 0,9\ Mo + 12,5\ Nb + 8\ V \qquad (1),$$

où les symboles d'éléments de formule (1) désignent respectivement les teneurs (% en masse) des éléments chimiques correspondants, et lorsque le symbole d'un élément chimique qui n'est pas inclus se voit attribuer une valeur de 0.

**2.** Tuyau en acier composé de l'acier haute résistance selon la revendication 1.

**3.** Procédé de fabrication de l'acier haute résistance selon la revendication 1, le procédé comprenant un processus de chauffage dans lequel une matière première d'acier est chauffée à une température de 1050°C à 1 200°C,
un processus de laminage à chaud dans lequel la matière première d'acier, qui a été chauffée au cours du processus de chauffage, est laminée à chaud dans les conditions d'un taux de réduction de laminage cumulé de 50 % ou plus dans une plage de température de 900°C ou moins et d'une température de finition au laminage de 850°C ou moins, et un processus de refroidissement accéléré dans lequel la plaque d'acier laminée à chaud, qui a été obtenue dans le processus de laminage à chaud, est soumise à un refroidissement accéléré dans les conditions d'une vitesse de refroidissement de 5°C/s ou plus et d'une température d'arrêt de refroidissement de 300°C à 450°C.

**4.** Procédé de fabrication d'un tuyau en acier, le procédé comprenant
un processus de formage à froid dans lequel une plaque d'acier composée de l'acier haute résistance fabriqué selon la revendication 3 est soumise à un formage à froid de manière à être mise en forme de tuyau et un processus de soudage dans lequel des parties bout à bout de la plaque d'acier, qui a été formée en une forme de tuyau dans le processus de formage à froid, sont soudées.

**5.** Procédé de fabrication d'un tuyau en acier selon la revendication 4, dans lequel le tuyau en acier a un degré API X100 ou supérieur.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000290728 A
- JP 4821939 B
- JP 5055736 B
- JP 4741528 B
- JP 2006183133 A